# FASCICULE DE BREVET EUROPEEN

(11) **EP 3 803 160 B1**
(45) Date de publication et mention de la délivrance du brevet: **14.12.2022**
(21) Numéro de dépôt: 19728913.5
(22) Date de dépôt: 28.05.2019
(51) Int. Cl.: F16H 61/08, F16H 61/02

(54) **PROCEDE DE SELECTION D'UNE CIBLE D'ETAT DE CHAINE CINEMATIQUE DE TRANSMISSION AUTOMATIQUE**
VERFAHREN ZUR AUSWAHL EINES ZIELS FÜR DEN ZUSTAND DES ANTRIEBSSTRANGS EINES AUTOMATIKGETRIEBES
METHOD FOR SELECTING A TARGET FOR THE STATE OF THE DRIVE TRAIN OF AN AUTOMATIC TRANSMISSION

(30) Priorité: 08.06.2018 FR 1855033
(43) Date de publication de la demande: 14.04.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: LEFEVRE, Aurelien, 92340 Bourg la Reine (FR)
(74) Mandataire: Renault Group
(86) Numéro de dépôt international: PCT/EP2019/063840
(87) Numéro de publication internationale: WO 2019/233829

(56) Documents cités:
- EP-A1- 2 588 354
- EP-A1- 3 299 236
- DE-C1- 19 714 852
- US-B1- 6 558 294

## Description

La présente invention se rapporte au contrôle des changements d'état de chaîne cinématique, sur une transmission de véhicule électrique/hybride ou thermique.

Plus précisément, elle a pour objet un procédé de sélection d'une cible d'état de chaîne cinématique d'une transmission automatique, en phase de transition entre un état courant et un état adopté initialement comme cible parmi plusieurs autres, pour satisfaire une demande d'accélération du conducteur.

Sur un véhicule équipé d'une boîte de vitesses à rapports discrets, qu'il soit électrique/hybride ou thermique, les phases de changement d'état de la chaîne cinématique peuvent être définis comme une combinaison de(s) coupleur(s) et de réducteur(s) spécifiques à une architecture véhicule donnée.

Selon la complexité de l'architecture, ces phases de transition peuvent durer jusqu'à plusieurs secondes.

Le fait qu'un changement d'état de la chaîne cinématique puisse durer plusieurs secondes, a pour conséquence dans certains cas, que la cible initiale soit écartée au cours de la transition, au profit d'une nouvelle cible. Le changement de cible peut intervenir pour diverses raisons. L'une d'elles est que la vitesse de déplacement du véhicule, devenue trop élevée au cours de la transition, introduit des problèmes de fiabilité ou d'autres risques.

Lorsqu'un changement de cible en cours de transition est dû à une augmentation de la demande d'accélération du conducteur, ce changement peut avoir un impact particulièrement important sur le comportement du véhicule, et sa perception.

Le conducteur requérant une accélération du véhicule attend celle-ci dans un délai raisonnable, avec un niveau de réalisation satisfaisant. Pendant un changement d'état, la boîte est en phase transitoire. Elle peut encore avoir plusieurs états transitoires à enchaîner avant d'atteindre sa cible. Si la requête évolue en phase transitoire, la boîte peut viser une nouvelle cible, dont le temps de réalisation n'était pas prévisible initialement. Le boîte peut fournir le couple requis pour cette accélération à des niveaux différents, en fonction de sa nouvelle cible. Le choix d'une nouvelle cible par la boîte au cours d'un changement d'état déjà entamé, a donc un effet prépondérant sur le délai et le niveau d'obtention de l'accélération requise par le conducteur.

Par la publication US 8,944,957, on connaît une méthode permettant de déterminer si un rapport cible, en cours de réalisation, doit être éliminé suite à une augmentation de requête de couple. La méthode indique également comment la nouvelle cible de la boîte de vitesses est réalisée. Toutefois, cette publication ne précise pas comment choisir celle-ci. La publication DE19714852 décrit un procédé de contrôle de transmission automatique à double embrayage, dans lequel un passage montant est interrompu avec rétrogradage sur le rapport initial lorsqu'un critère d'interruption est reconnu.

La publication GB 2 433 301, décrit une méthode particulière de détermination d'un rapport de boîte à double embrayage, en fonction de seuils de vitesse et de la position de la pédale d'accélérateur. Le choix s'effectue de manière discrète, sans options entre plusieurs cibles, ni possibilité de changer de cible en cours de passage. La publication US 6 558 294 décrit une méthode de contrôle de kick-down, prévoyant une comparaison des conditions d'accélération pour plusieurs combinaisons de rapports, en particulier en ce qui concerne le temps de réponse et l'intensité de l'accélération.

Toutefois, aucune de ces publications ne prévoit comment définir le meilleur état de chaîne la cinématique cible, pour l'obtention d'une accélération requise par le conducteur dans une phase de changement d'état de la chaîne cinématique déjà en cours.

La présente invention vise à sélectionner des rapports cible de transmission automatique, selon des critères de temps de réponse et d'intensité d'accélération, en réponse aux requêtes du conducteur.

Dans ce but, on applique la méthode selon la revendication 1.

Cette méthode est applicable sur tout véhicule thermique/hybride/électrique, équipé d'une transmission automatique à rapports discrets. Elle impose un arbitrage entre les états disponibles, c'est à dire l'autorisation de certains d'entre eux et l'interdiction des autres. Une série d'arbitrages successifs permet de définir l'ensemble des états éligibles comme cible à réaliser par la transmission. Les arbitrages peuvent porter de manière non limitative sur :
- le mode de conduite choisi (Marche avant, marche arrière, etc.),
- des limites de fiabilité en termes de régime des organes de traction (Machine électrique, moteur thermique, etc.), ou
- des contraintes de brio déterminées par la position de la pédale d'accélérateur ou des requêtes extérieures.

D'autres caractéristiques et avantages de la présente invention ressortiront clairement de la description suivante, d'un mode de réalisation particulier de celle-ci, en se reportant aux dessins annexés, sur lesquels
- la figure 1 est un logigramme de la stratégie développée, et
- la figure 2 est un chronogramme de son application.

Dans la description qui suit, l'arbitrage préliminaire à une nouvelle sélection de cible, est un arbitrage lié au brio. Dans cet exemple, si un état n'a pas la capacité de mettre en œuvre la demande d'accélération du conducteur, cet état est jugé inéligible pour être sélectionné.

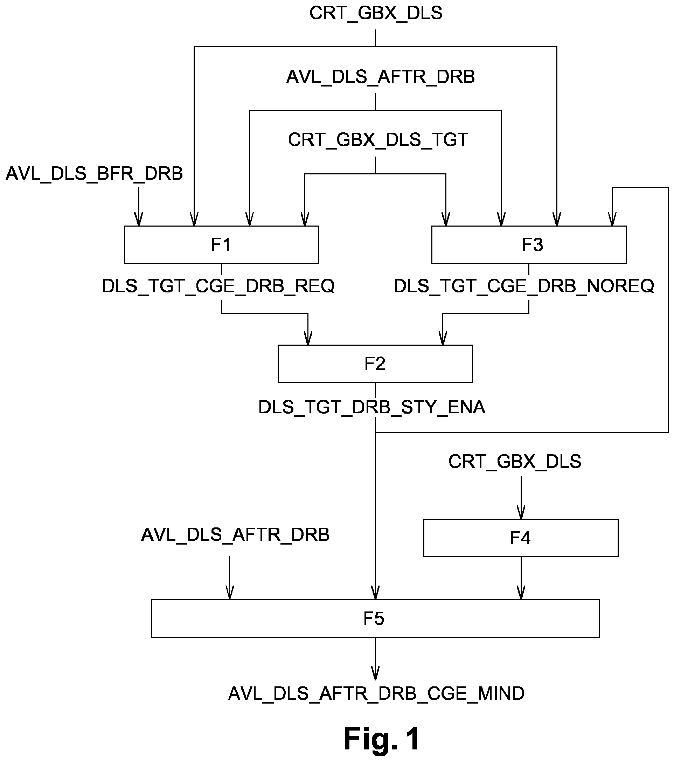

Le déroulement des opérations est illustré par la figure 1. Elles consistent à sélectionner sous certaines conditions une nouvelle cible d'état *CRT_GBX_DLS_TGT* de la chaîne cinématique, alors que la transmission est déjà en phase de transition entre un état courant et une cible initiale, choisie parmi plusieurs états pour satisfaire une demande d'accélération du conducteur. Ce procédé se décompose en plusieurs étapes. Leur enchaînement conduit à déterminer une liste des états de la chaîne cinématique permettant le respect des contraintes d'accélération requises par le conducteur en termes de temps de réponse et d'intensité, aussi appelées contrainte de brio.

La liste d'éligibilité des états de la chaîne cinématique avant un éventuel arbitrage lié aux contraintes de brio est appelée *AVL_DLS_BFR_DRB.* Elle est établie en prévision d'un éventuel changement de cible, qui deviendrait nécessaire, pour des raisons de brio, au cours un changement d'état déjà engagé. La liste des états de chaîne cinématique éligibles après un arbitrage liée aux contraintes de brio, est *AVL_DLS_AFTR_DRB.*

L'étape **F1** a pour objectif de déterminer si l'arbitrage entre des états éligibles pour répondre à une demande d'accélération du conducteur pendant un changement d'état, doit être activé. La requête d'activation correspondante est *DLS_TGT CGE DRB REQ.* Cette requête devient effective, si les deux conditions suivantes sont satisfaites :
- un changement d'état de la chaîne cinématique est en cours de réalisation dans la transmission (état courant *CRT_GBX_DLS* différent de la cible *CRT_GBX_DLS_TGT*) *;*
- l'état cible *CRT GBX DLS TGT* est jugé non éligible, au motif qu'il ne respecte pas la contrainte d'accélération requise par le conducteur : l'état cible *CRT GBX DLS TGT* était éligible avant un arbitrage lié aux contraintes de brio (liste *AVL_DLS_BFR_DRB*) ; il ne l'est plus après (liste *AVL_DLS_AFTR_DRB*) .

En résumé, l'arbitrage entre le maintien de l'état initialement choisi et la sélection d'une nouvelle cible est activé si :
- le changement d'état entre l'état courant et la cible initiale est en cours de réalisation dans la transmission, et
- la cible initiale ne respecte plus la contrainte d'accélération requise par le conducteur.
Dans le cas contraire, il n'est pas activé.

L'étape **F2** a pour objet la sélection des états de la chaîne cinématique, qui vont répondre de manière optimale à une demande d'accélération du conducteur pendant un changement d'état. L'événement d'activation de l'arbitrage est *DLS_TGT DRB STY ENA.* Si la requête d'activation *DLS_TGT_CGE_DRB_REQ* est effective, l'arbitrage est activé : *DLS_TGT_DRB_STY_ENA* est VRAI. Si la requête de désactivation *DLS_TGT_CGE_DRB_NOREQ* est effective, l'arbitrage est désactivé : *DLS_TGT_DRB_STY_ENA* est FAUX.

L'étape **F3** consiste à déterminer quand l'arbitrage doit être désactivé. La requête de désactivation *DLS_TGT_CGE_DRB_NOREQ* devient effective si la stratégie est active (*DLS_TGT_DRB_STY_ENA* = *VRAI*) et si l'une des deux conditions suivantes est satisfaite :
- la nouvelle cible *CRT_GBX_DLS_TGT,* est éliminée en amont de l'arbitrage, ou
- elle est atteinte, et a été l'état courant de la chaîne cinématique au-delà d'une période déterminée.

L'étape **F4** consiste à attribuer, en fonction de l'état courant *CRT_GBX_DLS,* des coefficients de priorité aux autres états. Dans ce classement, appelé *DLS_Ranking,* les coefficients les plus bas sont donnés aux états optimaux, les coefficients plus élevés aux autres.

L'étape **F5** consiste à établir une liste d'états optimaux *AVL_DLS_AFTR_DRB_CGE_MIND,* permettant de respecter les contraintes d'accélération requises par le conducteur au cours d'un changement d'état, quant au temps de réponse et à l'intensité. Les états optimaux permettent à la transmission d'avoir une cible optimale. On choisit la nouvelle cible *CRT_GBX_DLS_TGT* dans la liste des états optimaux *AVL_DLS_AFTR_DRB_CGE_MIND* établie en fonction du respect de certaines contraintes d'accélération. Si *DLS_TGT_DRB_STY_ENA est* FAUX, la liste des états éligibles à la fin de cet arbitrage correspond à la liste d'éligibilité précédente *AVL_DLS_AFTR_DRB.* Si *DLS_TGT_DRB_STY_ENA* est VRAI le fonctionnement se décompose comme suit.
a) Lorsque la cible *CRT GBX DLS TGT* est éliminée en cours de réalisation pour des raisons de brio, on détermine dans un premier temps, les états prioritaires et éligibles comme nouvelle cible. Pour cela, on choisit la valeur la plus basse des coefficients des états éligibles à l'issue de l'arbitrage lié aux contraintes de brio (*DLS_AVL_AFTR_DRB*)*,* à partir de la liste des coefficients établie à l'étape **F4** (*DLS_Ranking*). Parmi les états ayant ce coefficient, seuls sont retenus les états déjà éligibles dans l'arbitrage précédent (*AVL_DLS_AFTR_DRB*)*.* La nouvelle cible *CRT GBX DLS TGT* est choisie finalement dans la liste *AVL_DLS_AFTR_DRB_CGE_MIND,* selon des contraintes de dépollution/consommation.
b) Lorsque la nouvelle cible *CRT GBX DLS TGT* est déterminée, seule celle-ci est éligible dans la liste *AVL_DLS_AFTR_DRB_CGE_MTND,* pour éviter le choix final d'un autre état ayant la même priorité. La liste *AVL_DLS_AFTR_DRB_CGE_MIND* permet de respecter la volonté du conducteur en termes de temps de réponse, et d'intensité d'accélération.

En d'autres termes, lorsque la cible initiale (*CRT_GBX_DLS_TGT*) est éliminée en cours de réalisation :
- on détermine une liste d'états éligibles comme nouvelle cible, en leur attribuant des coefficients de priorité selon un arbitrage lié à des contraintes de brio (*AVL_DLS_AFTR_DRB*)*,*
- on sélectionne la nouvelle cible (*CRT_GBX_DLS_TGT*) parmi les états éligibles, et
- on impose la nouvelle cible à la chaîne cinématique, jusqu'à sa réalisation complète.

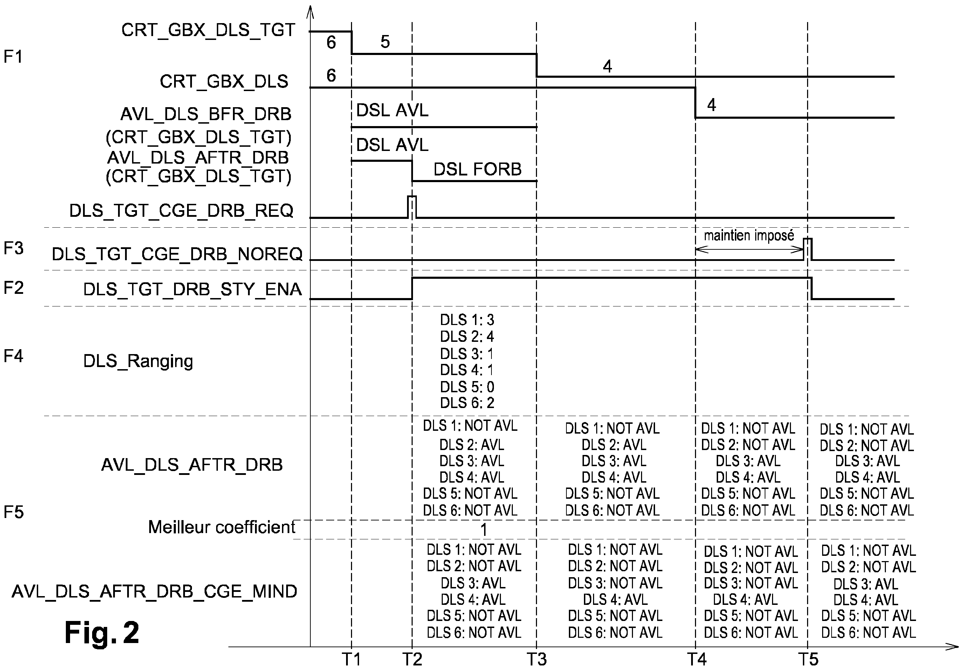

La figure 2 illustre l'application du procédé sur une transmission automatique à rapports discrets, disposant de six états de chaîne cinématique en marche avant.

A la date T1, l'état cible de la chaîne cinématique *CRT GBX DLS TGT* passe de 6 à 5, alors que l'état courant *CRT_GBX_DLS* est à 6 : le changement d'état débute à cet instant.

A la date T2, la cible courante *CRT GBX DLS TGT* bien qu'éligible avant l'arbitrage lié aux contraintes de brio (liste *AVL_DLS_BFR_DRB)*, est jugé inéligible après (liste *AVL_DLS_AFTR_DRB).* Cette cible est éliminée. A T2, la requête d'activation de la stratégie *DLS TGT CGE DRB REQ* devient VRAI dans la fonction F1, et implique l'activation de la stratégie, *DLS_TT_DRB_STY_ENA,* dans la fonction F2.

Entre T2 et T3, la fonction F4 attribue les coefficients de priorité aux différents états de la chaîne cinématique en fonction de l'état courant *CRT_GBX_DLS* à travers la liste *DLS_Ranking* : l'état 1 a un coefficient 3, l'état 2 un coefficient 4, etc. A partir du classement *DLS_Ranking,* et de la liste d'éligibilité des états après l'arbitrage lié aux contraintes de brio *AVL_DLS_AFTR_DRB,* la fonction F5 détermine le plus petit coefficient disponible : seuls sont disponibles les états 2, 3 et 4 avec leurs coefficient respectifs 4, 1 et 1. Le plus petit coefficient disponible est 1.

Comme indiqué plus haut, l'arbitrage permet de définir les états permettant le respect des contraintes d'accélération requises par le conducteur en termes de temps de réponse et d'intensité. Il n'autorise que les états possédant la valeur de coefficient le plus bas observé. Dans cet exemple, l'état 2 est interdit car il possède le coefficient 4, alors que les états 3 et 4 sont autorisés car leurs coefficients sont égaux à 1. La liste des états éligibles est *AVL_DLS_AFTR_DRB_CGE_MIND.*

Cet arbitrage et les autorisations correspondantes restent valides jusqu'à la sélection du nouvel état cible par la boîte de vitesses, parmi ceux qui sont jugés éligibles.

A la date T3, la cible *CRT_GBX_DLS_TGT* passe de l'état 5 à l'état 4. Entre T3 et T4, la fonction F5 n'autorise plus que la cible courante *CRT GBX DLS TGT* dans la liste *AVL_DLS_AFTR_DRB_CGE_MTND, de manière à* forcer la transmission à rester sur cette cible.

A la date T4, la boîte a fini de réaliser la cible *CRT_GBX_DLS_TGT.* L'état courant *CRT_GBX_DLS* de la chaîne, est passé de la valeur 6 à la valeur 4. La seule cible autorisée par La fonction F5 jusqu'à la date T5, est toujours l'état cible devenu état courant.

A la date T5, l'état courant *CRT_GBX_DLS* correspond à la cible *CRT GBX DLS TGT* depuis T4. La fonction F3 demande à désactiver l'arbitrage, par la requête *DLS_TGT_CGE_DRB_NOREQ,* pour permettre à la boîte de vitesses de choisir une autre cible potentielle. Cette requête désactive la stratégie dans la fonction F2 : l'activation de la stratégie *DLS_TGT_DRB_STY_ENA* passe à FAUX. A partir de la désactivation de la stratégie, les états éligibles en fin de stratégie dans *AVL_DLS_AFTR_DRB_CGE_MIND* sont les états éligibles après l'arbitrage lié aux contraintes de brio *AVL_DLS_AFTR_DRB.* Dans cet exemple, il s'agit des états 3 et 4.

Les avantages principaux de l'invention sont le peu de mise au point à effectuer sur la stratégie d'arbitrage, et le caractère transversal de la méthode, qui peut être adoptée sur tout véhicule, équipé d'une boîte de vitesses automatique à rapports discrets.

## Revendications

1. Procédé de sélection d'une cible d'état (*CRT_GBX_DLS_TGT)* de chaîne cinématique d'une transmission automatique, en phase de transition entre un état courant et un état adopté initialement comme cible parmi plusieurs autres pour selon lequel on active un arbitrage entre le maintien de la cible initiale et la sélection d'une nouvelle cible au cours du changement d'état entre l'état courant et la cible initiale, si celle-ci ne respecte plus la contrainte d'accélération requise par le conducteur, , **caractérisé en ce que**, lorsque la cible initiale (*CRT_GBX_DLS_TGT)* est éliminée en cours de réalisation :
- on détermine une liste d'états éligibles comme nouvelle cible, en leur attribuant des coefficients de priorité selon un arbitrage lié à des contraintes d'accélération requises par le conducteur en termes de temps de réponse et d'intensité (*AVL_DLS_AFTR_DRB*)*,*
- on sélectionne la nouvelle cible (*CRT_GBX_DLS_TGT)* parmi les états éligibles, et
- on impose la nouvelle cible à la chaîne cinématique, jusqu'à sa réalisation complète.

2. Procédé de sélection selon la revendication 1, **caractérisé en ce qu'**on choisit la nouvelle cible (*CRT_GBX_DLS_TGT)* dans une liste d'états optimaux (*AVL_DLS_AFTR_DRB_CGE_MIND)* établie en fonction du respect de contraintes d'accélération.

3. Procédé de sélection selon la revendication 1 ou 2, **caractérisé en ce que** la nouvelle cible est choisie en fonction de critères de dépollution et/ou de consommation.

4. Procédé de sélection selon la revendication 1, **caractérisé en ce que**, lorsque la nouvelle cible (*CRT_GBX_DLS_TGT)* est sélectionnée, elle reste seule la seule éligible dans la liste d'états optimaux (*AVL_DLS_AFTR_DRB_CGE_MIND).*

5. Procédé de sélection selon l'une des revendications précédentes, **caractérisé en ce que** l'arbitrage entre le maintien de l'état initialement choisi et la sélection d'une nouvelle cible est désactivé :
- si la nouvelle cible choisie est (*CRT_GBX_DLS_TGT),* est éliminée en cours d'arbitrage, ou
- si elle est réalisée, et reste l'état courant de la chaîne cinématique pendant une période déterminée.

## Patentansprüche

1. Verfahren zur Auswahl eines Zustandsziels (CRT_GEX_DLS_TGT) eines Antriebsstrangs eines Automatikgetriebes in der Übergangsphase zwischen einem aktuellen Zustand und einem ursprünglich als Ziel unter verschiedenen anderen übernommenen Zustand, für gemäß dem eine Entscheidung zwischen der Aufrechterhaltung des Ausgangsziels und der Auswahl eines neuen Ziels während der Zustandsänderung zwischen dem aktuellen Zustand und dem Ausgangsziel aktiviert wird, wenn dieses nicht mehr die vom Fahrer geforderte Beschleunigungsvorgabe einhält, **dadurch gekennzeichnet, dass**, wenn das Ausgangsziel (CRT_GEX_DLS_TGT) entfernt wird, während der Realisierung:
- eine Liste von als neues Ziel wählbaren Zuständen bestimmt wird, indem ihnen Prioritätskoeffizienten gemäß einer Entscheidung zugewiesen werden, die mit vom Fahrer geforderten Beschleunigungsvorgaben bezüglich der Reaktionszeit und der Intensität (AVL_DLS_AFTR_DRB) verbunden ist,
- das neue Ziel (CRT_GBX*_*DLS*_*TGT) unter den wählbaren Zuständen ausgewählt wird, und
- das neue Ziel dem Antriebsstrang bis zu seiner vollständigen Realisierung vorgeschrieben wird.

2. Auswahlverfahren nach Anspruch 1, **dadurch gekennzeichnet, dass** das neue Ziel (CRT_GEX_DLS_TGT) aus einer Liste optimaler Zustände (AVL_DLS_AFTR_DRE_CGE_MIND) ausgewählt wird, die abhängig von der Einhaltung von Beschleunigungsvorgaben erstellt wird.

3. Auswahlverfahren nach Anspruch 1 oder 2, **dadurch gekennzeichnet, dass** das neue Ziel abhängig von Kriterien der Abgasentgiftung und/oder des Verbrauchs ausgewählt wird.

4. Auswahlverfahren nach Anspruch 1, **dadurch gekennzeichnet, dass**, wenn das neue Ziel (CRT_GEX_DLS_TGT) ausgewählt ist, es alleine das einzig wählbare in der Liste optimaler Zustände (AVL_DLS_AFTR_DRB_CGE_MIND) bleibt.

5. Auswahlverfahren nach einem der vorhergehenden Ansprüche, **dadurch gekennzeichnet, dass** die Entscheidung zwischen der Aufrechterhaltung des ursprünglich gewählten Zustands und der Auswahl eines neuen Ziels deaktiviert wird:
- wenn das gewählte neue Ziel (CRT*_*GBX*_*DLS*_*TGT) ist, während der Entscheidung entfernt wird, oder
- wenn es realisiert wird und während einer bestimmten Zeitdauer der aktuelle Zustand des Antriebsstrangs bleibt.

## Claims

1. Method for selecting a target state *(CRT*_*GBX_DLS_TGT)* of a drive train of an automatic transmission, in a transition phase between a current state and a state adopted initially as target out of several others, for wherein an arbitration is activated between the maintaining of the initial target and the selection of a new target in the course of the change of state between the current state and the initial target, if the latter no longer observes the acceleration constraint required by the driver, **characterized in that**, when the initial target *(CRT_GBX_DLS_TGT)* is eliminated in the course of realization:
- a list is determined of states eligible as new target, by assigning them priority coefficients according to an arbitration linked to acceleration constraints required by the driver in terms of response time and intensity *(AVL_DLS_AFTR_DRB),*
- the new target *(CRT_GBX_DLS_TGT)* is selected out of the eligible states, and
- the new target is imposed on the drive train, until completely realized.

2. Selection method according to Claim 1, **characterized in that** the new target *(CRT_GBX_DLS_TGT)* is chosen from a list of optimal states *(AVL_DLS_AFTR_DRB_CGE_MIND)* established as a function of compliance with acceleration constraints.

3. Selection method according to Claim 1 or 2, **characterized in that** the new target is chosen as a function of depollution and/or consumption criteria.

4. Selection method according to Claim 1, **characterized in that**, when the new target *(CRT_GBX_DLS_TGT)* is selected, it remains the only one eligible in the list of optimal states *(AVL_DLS_AFTR_DRB_CGE_MIND).*

5. Selection method according to one of the preceding claims, **characterized in that** the arbitration between the maintaining of the state initially chosen and the selection of a new target is deactivated:
- if the new chosen target is *(CRT_GBX_DLS_TGT),* is eliminated in the course of arbitration, or
- if it is realized, and remains the current state of the drive train for a determined period.
